# EUROPÄISCHE PATENTSCHRIFT

(11) **EP 1 255 073 B1**
(45) Veröffentlichungstag und Bekanntmachung des Hinweises auf die Patenterteilung: **17.08.2005**
(21) Anmeldenummer: 02008793.8
(22) Anmeldetag: 19.04.2002
(51) Int. Cl.: F22B 1/18, F01K 3/14, F27D 17/00

(54) **Verfahren zur Verwertung von Abwärme aus der Roheisenproduktion in Drehherdöfen**
Method for the utilization of waste heat from pig iron production in rotary hearth furnaces
Procédé pour la valorisation de chaleur perdue de la production de fonte brute dans des fours à sole tournante

(30) Priorität: 03.05.2001 DE 10121624
(43) Veröffentlichungstag der Anmeldung: 06.11.2002
(73) Patentinhaber: RWE Power Aktiengesellschaft, 45128 Essen (DE)
(72) Erfinder: Ulrich Ney, 45 279 Essen (DE); Wolfgang Sticher, 50 189 Elsdorf (DE); Dietrich Bartelt, 47198 Duisburg (DE)
(74) Vertreter: Albrecht, Rainer Harald, Dr.-Ing.

(56) Entgegenhaltungen:
- "TECHNOLOGICAL INNOVATIONS OF THE REDSMELT ROTARY HEARTH FURNACE" MPT. METALLURGICAL PLANT AND PLANT AND TECHNOLOGY INTERNATIONAL, VERLAG STAHLEISEN, DUESSELDORF, DE, März 2000 (2000-03), Seiten 102-103, XP008022382 ISSN: 0935-7254

## Beschreibung

Die Erfindung betrifft ein Verfahren zur Verwertung von Abwärme aus der Roheisenproduktion in Drehherdöfen.

Bei einem aus MPT International 3/2000, Seiten 102 und 103, bekannten Verfahren zur Erzeugung von Roheisen werden Eisenerz, Zuschläge und gemahlene Kohle vorgeheizt und in den erforderlichen Verhältnissen in einen Drehherdofen gegeben. Unter Zugabe von Verbrennungsluft wird das eingebrachte Eisenerz in Eisenschwamm umgewandelt und anschließend in einen Elektroofen entladen und dort eingeschmolzen. Im Zuge des Drehherdofenprozesses fällt ein niederkalorisches Abgas mit einer Temperatur von ca. 1370 °C und Restgehalten von CO und H₂ an. Das Abgas mit einem Gesamtheizwert von etwa 400 bis 850 kJ/m³ kann in dieser Form nicht an die Umwelt abgegeben werden. Es ist bekannt, das bei der Roheisenproduktion entstehende niederkalorische Abgase unter Zugabe von Verbrennungsluft nachzuverbrennen und das heiße Gas zur Erzeugung von hochgespanntem Dampf zu nutzen. Im Rahmen der bekannten Maßnahmen erfolgt die Nachverbrennung, um die Konsistenz der im Gasstrom enthaltenen Flugasche zu verändern.

Der Erfindung liegt die Aufgabe zugrunde, ein Verfahren anzugeben, bei dem nicht nur der Heizwert des bei der Roheisenproduktion in Drehherdöfen anfallenden Abgases zur Dampferzeugung genutzt wird, sondern eine weitergehende, auf die Roheisenproduktion in Drehöfen abgestimmte Nutzung als Prozessgas erfolgt.

Ausgehend von einem Verfahren zur Verwertung von Abwärme aus der Roheisenproduktion in Drehherdöfen, bei dem ein bei der Roheisenproduktion entstehendes, niederkalorisches Abgas mit Restgehalten an CO und H₂ in einem Dampferzeuger mit Verbrennungsluft zu einem inerten Prozessgas nachverbrannt und durch Wärmeaustausch mit dem Prozessgas Heißdampf für einen Dampfturbinenprozess erzeugt wird, wird die Aufgabe erfindungsgemäß dadurch gelöst,
dass der Heißdampf durch Wärmeaustausch mit dem Prozessgas in mehreren Überhitzerstufen überhitzt wird,
dass das Prozessgas in Teilströmen mit unterschiedlichen Temperaturniveaus abgezogen wird und
dass durch die Menge und/oder Temperatur der Verbrennungsluft die Entnahmegastemperaturen so geregelt werden,
dass das Temperaturniveau eines ersten, zwischen den Überhitzerstufen aus dem Dampferzeuger abgezogenen Teilstromes auf die Verwendung des Prozessgases zur Vorwärmung von Roherz abgestimmt wird und dass das Temperaturniveau eines zweiten, am Dampferzeugeraustritt abgezogenen Teilstromes auf die Verwendung des Prozessgases zur Trocknung von Kohle abgestimmt wird. Das erfindungsgemäße Verfahren wird zweckmäßig so abgestimmt, dass der zur Roherzvorwärmung eingesetzte Prozessgasteilstrom mit einer Temperatur zwischen 1000 und 1300 °C abgezogen wird und dass der zur Kohletrocknung verwendete Prozessgasteilstrom den Dampferzeuger mit einer Temperatur zwischen 750 °C und 900 °C verlässt.

Das bei der Roheisenproduktion in Drehherdöfen anfallende Abgas hat eine hohe Temperatur. Zum vollständigen Ausbrand der noch im Abgas vorhandenen brennbaren Bestandteile an Kohlenmonoxid und Kohlenwasserstoff wird Sauerstoff in Form von Verbrennungsluft hinzugeführt. Dabei steigt die Gastemperatur weiter. Durch die hohen Gastemperaturen wird ein sicherer Ausbrand bei geringer Verbrennungsluftmenge gewährleistet. Da die erfindungsgemäße Verwendung des nachverbrannten Abgases als Prozessgas zur Vorwärmung von Roherz sowie zur Trocknung von Kohle einen Restsauerstoffgehalt von bis zu 3 % zulässt, kann eine überstöchiometrische Luftmenge zugeführt werden. Diese zusätzliche Luftmenge wird erfindungsgemäß zur Regelung der Entnahmegastemperaturen eingesetzt. - Durch Steuerung der Verbrennungsluftmenge können die Entnahmegastemperaturen der Prozessgasteilströme in einer Bandbreite von +/- 50 K geregelt werden. Die Regelbandbreite ist bei der durch den zulässigen Restsauerstoffgehalt im Abgas festgelegten Verbrennungsluftmenge durch eine Vorwärmung der Verbrennungsluft noch vergrößerbar. Gemäß einer bevorzugten Ausführungsform der Erfindung wird die Verbrennungsluft in einem mit Prozessgas betriebenen Luftvorwärmer auf eine Temperatur bis 550 °C vorgewärmt.

In weiterer Ausgestaltung lehrt die Erfindung, dass dem Heißdampf zwischen den Überhitzerstufen Wasser zur Temperaturregelung zugeführt wird, und dass die Feineinstellung der Entnahmegastemperatur des Prozessgases durch geregelte Zugabe von Wasser in den Heißdampfstrom erfolgt. Durch die geregelte Zugabe von Wasser können die Entnahmegastemperaturen der Prozessgasströme in einer Bandbreite von +/- 20 K eingestellt werden. Durch eine zusätzliche Dampfkühlung am Austritt der letzten Überhitzerstufe kann die Temperatur des der Dampfturbine zugeführten Dampfes geregelt werden.

Ein durch Lastwechsel oder Anlagestörungen bedingter Anstieg der Entnahmegastemperaturen kann durch Wassereindüsung in das Prozessgas ausgeglichen werden. Die Wassereindüsung erfolgt an der jeweiligen Entnahmestelle, wobei eine Temperaturabsenkung von mehr als 100 K möglich ist. Ferner besteht die Möglichkeit, das Prozessgas bei einem zu starken Temperaturanstieg über eine Notkühlleitung, in der eine direkte Wasserkühlung vorgesehen ist, abzuleiten.

Im Rahmen der Erfindung liegt es schließlich, dass der Dampferzeuger mit vorgewärmtem Speisewasser betrieben wird. Durch Regelung der Speisewasservorwärmung kann eine Feinsteinstellung der Entnahmegastemperatur des am Dampferzeugeraustritt abgezogenen Prozessgasteilstromes vorgenommen werden.

Im Folgenden wird die Erfindung anhand einer lediglich ein Ausführungsbeispiel darstellenden Zeichnung erläutert. Es zeigen schematisch
- Fig. 1: das Anlagenschema eines Verfahrens zur Verwertung von Abwärme aus der Roheisenproduktion in Drehherdöfen,
- Fig. 2: das Blockschema eines im Rahmen der Fig. 1 dargestellten Dampferzeugers,
- Fig. 3: die Ausbildung des in Fig. 2 dargestellten Dampferzeugers im Längsschnitt.

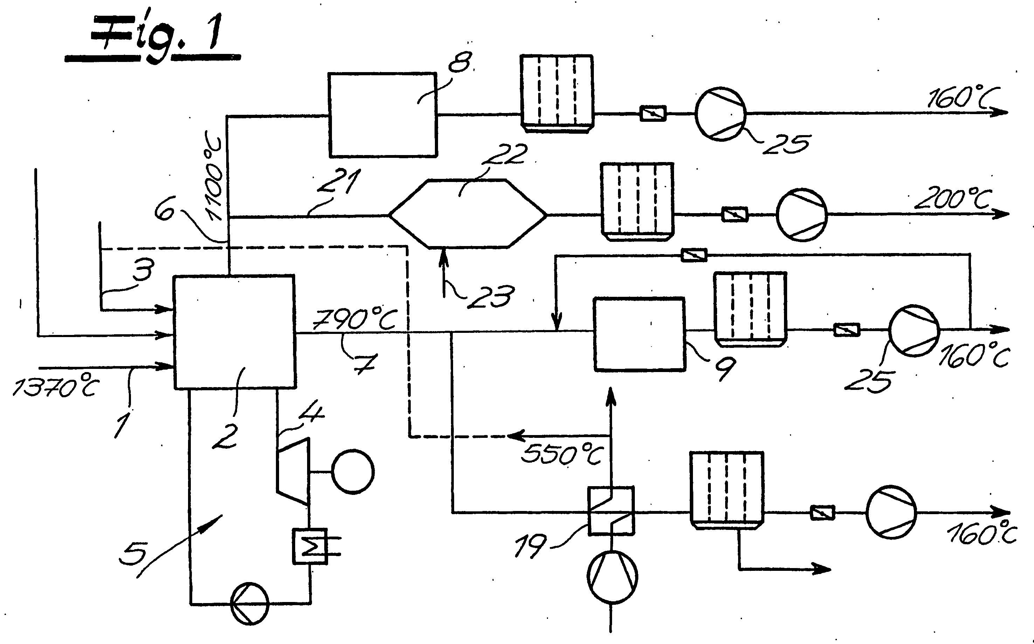

Die in den Figuren dargestellte Anlage dient zur Verwertung von Abwärme aus der Roheisenproduktion in Drehherdöfen. Ein bei der Roheisenproduktion entstehendes, niederkalorisches Abgas 1 mit Restgehalten an CO und H₂ wird in einem Dampferzeuger 2 mit Verbrennungsluft 3 zu einem inerten Prozessgas nachverbrannt und durch Wärmeaustausch mit dem Prozessgas wird Heißdampf 4 für einen Dampfturbinenprozess 5 erzeugt. Der Fig. 1 entnimmt man ferner, dass das Prozessgas in Teilströmen 6, 7 aus dem Dampferzeuger abgezogen wird, wobei ein erster Prozessgasteilstrom 6 zur Vorwärmung 8 von Roherz eingesetzt wird und wobei ein zweiter, am Dampferzeugeraustritt abgezogener Teilstrom 7 einer Kohlemühle 9 zugeführt und zur Trocknung von Kohle eingesetzt wird. Die Temperaturen der beiden Teilströme 6, 7 sind auf die jeweiligen Anwendungen abgestimmt.

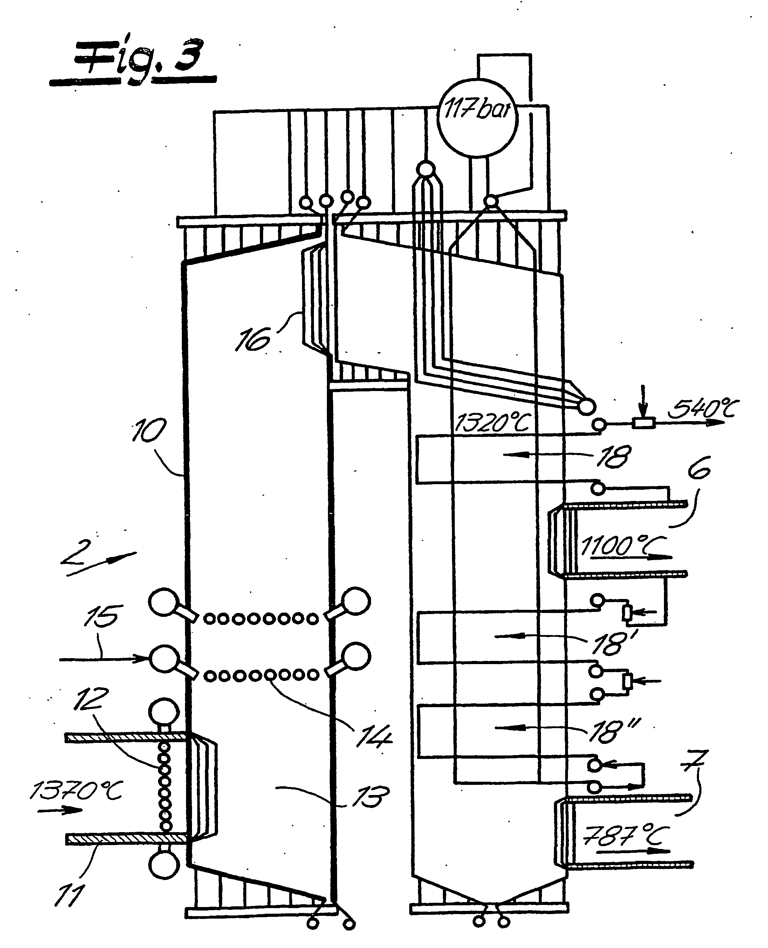

Das bei der Roheisenproduktion in Drehherdöfen anfallende niederkalorische Abgas 1 hat eine Temperatur von etwa 1370 °C und einen Gesamtheizwert von etwa 400 bis 850 kJ/m³. Der Dampferzeuger 2 weist aufgrund der hohen Eintrittsgastemperaturen gekühlte Wände 10 auf (Fig. 3).

Vorzugsweise sind die Wände als Verdampfer nach dem Naturumlaufprinzip ausgeführt. Das niederkalorische Abgas 1 wird dem Dampferzeuger 2 in einem feuerfesten Kanal 11 zugeführt. Zum vollständigen Ausbrand der noch im Abgas 1 vorhandenen brennbaren Bestandteile an Kohlenmonoxid und Wasserstoff wird Sauerstoff in Form von Verbrennungsluft 3 zugeführt. Dabei steigt die Gastemperatur auf etwa 1470 °C an. Die Zufuhr der Luft erfolgt mehrstufig mit hohem Impuls am Eintritt 12 des Gases in den Dampferzeuger 2 und im Verbrennungsraum 13 selbst. Im Verbrennungsraum 13 ist eine untere Luftebene 14 als Brennerebene ausgeführt, über die zum sicheren und vollständigen Ausbrand Erdgas 15 als Stützfeuerung zugeführt wird. Durch die hohen Gastemperaturen wird ein sicherer Ausbrand bei geringer Luftzufuhr gewährleistet. Die Verwendung des inerten Prozessgases zur Erzvorwärmung und zur Kohletrocknung erlaubt einen Restsauerstoffgehalt von bis zu 3 %. Dadurch ist es möglich, Luft im stöchiometrischen Überschuss zuzuführen und die Zusatzluft zur Regelung der Entnahmegastemperaturen in den abgezogenen Prozessgasteilströmen 6, 7 zu nutzen.

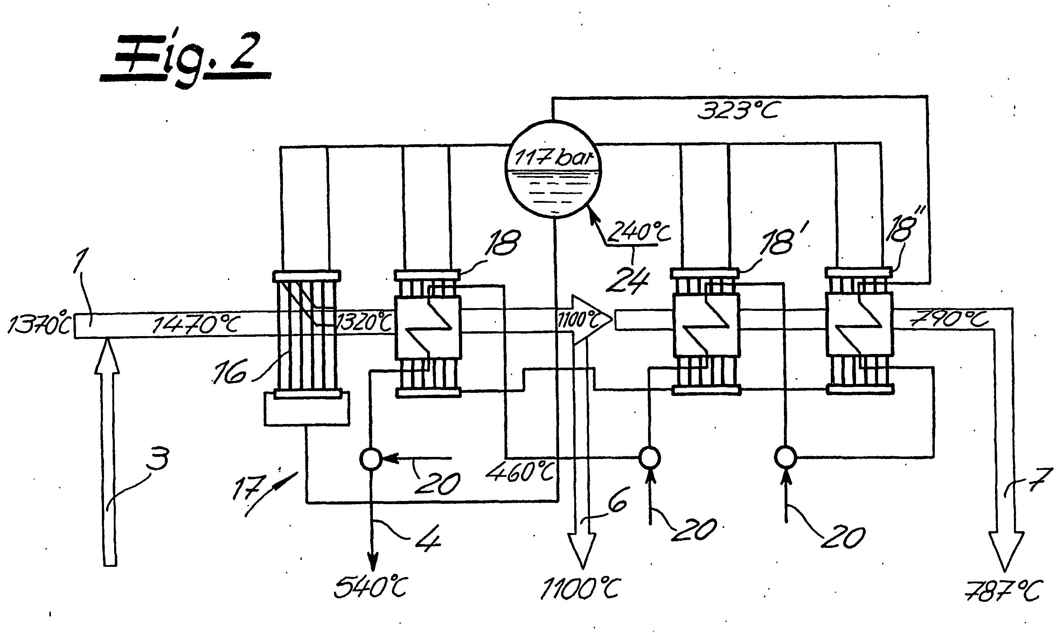

Den Fig. 2 und 3 entnimmt man, dass das durch Nachverbrennung auf ca. 1.470 °C erhitzte Abgas an den im Feuerraum angeordneten Wärmeübertragungsflächen 16, die in Fig. 2 als Feuerraumgitter dargestellt sind, Energie an einen Wasserkreislauf 17 abgibt, wobei hochgespannter Dampf mit einer Temperatur von 323 °C erzeugt wird und das Abgas auf ca. 1320 °C abgekühlt wird. Die Überhitzung des Dampfes auf die zum Betrieb einer Dampfturbine erforderliche Dampftemperatur von 540 °C erfolgt in mehreren Überhitzerstufen. Im Ausführungsbeispiel sind drei Überhitzerstufen 18, 18', 18" vorgesehen. Abgasseitig wird zwischen der ersten und der zweiten Überhitzerstufe 18, 18' ein inerter Prozessgasteilstrom 6 mit einer Temperatur zwischen 1000 und 1200 °C abgezogen und zur Vorwärmung des Roherzes verwendet. Im Ausführungsbeispiel ist die Temperatur dieses Prozessgasteilstroms 6 auf 1100 °C eingestellt. Ein zweiter, am Dampferzeugeraustritt abgezogener Prozessgasteilstrom 7 hat eine auf die Verwendung des Prozessgases zur Trocknung von Kohle abgestimmte Temperatur zwischen 750 °C und 900 °C und wird im Ausführungsbeispiel mit einer Entnahmegastemperatur von zirka 790 °C abgezogen. Durch die Verbrennungsluftmenge kann die Entnahmegastemperatur der Prozessgasteilströme 6, 7 in einer Bandbreite von +/- 50 K geregelt werden. Die Verbrennungsluft 3 wird in einem mit Prozessgas betriebenen Luftvorwärmer 19 vorgewärmt. Dabei erfolgt eine Erwärmung der Verbrennungsluft 3 auf Temperaturen bis 550 °C.

Dem Heißdampf 4 wird zwischen den Überhitzerstufen 18, 18', 18" Wasser 20 zur Temperaturregelung zugeführt. Die geregelte Wasserzugabe in den Heißdampfstrom 4 erfolgt zur Feineinstellung der Entnahmegastemperaturen der Prozessgasteilströme 6, 7. Durch die geregelte Wasserzugabe können die Entnahmegastemperaturen in den Prozessgasteilströmen 6, 7 in einer Bandbreite von +/- 20 K eingestellt werden.

Ein durch Lastwechsel oder Anlagestörungen bedingter Anstieg der Entnahmegastemperaturen kann durch Wassereindüsung in das Prozessgas ausgeglichen werden. Durch Wassereindüsungen an den Entnahmestellen ist eine Absenkung der Gastemperatur um mehr als 100 K möglich. Im Anlagenschema der Fig. 1 ist eine separate Abzugsleitung 21 vorgesehen, die mit einer Notkühlung 22 ausgerüstet ist. Die Notkühlung 20 arbeitet mit einer Wassereindüsung 23 (Quenche).

Der Dampferzeuger 2 wird zweckmäßig mit vorgewärmtem Speisewasser 24 betrieben. Durch Regelung der Speisewasservorwärmung ist eine Feinsteinstellung der Entnahmegastemperatur des am Dampferzeugeraustritt abgezogenen Prozessgasteilstromes 7 möglich.

Die Entnahme der Prozessgasteilströme aus dem Dampferzeuger wird über Sauggebläse 25 im Bereich der Eisenhütte geregelt. Die Verbrennungsluftmenge wird entsprechend dem Abgasmengenstrom nachgeregelt, wobei durch die zuvor beschriebenen Maßnahmen die Entnahmegastemperaturen der aus dem Dampferzeuger abgeführten und zur Vorwärmung des Roherzes sowie zur Trocknung der Kohle eingesetzten Prozessgasteilströme 6, 7 konstant gehalten wird.

## Patentansprüche

1. Verfahren zur Verwertung von Abwärme aus der Roheisenproduktion in Drehherdöfen, wobei ein bei der Roheisenproduktion entstehendes, niederkalorisches Abgas (1) mit Restgehalten an CO und H₂ in einem Dampferzeuger (2) zusammen mit Verbrennungsluft (3) zu einem inerten Prozessgas nachverbrannt wird und wobei durch Wärmeaustausch mit dem Prozessgas Heißdampf (4) für einen Dampfturbinenprozess (5) erzeugt wird, **dadurch gekennzeichnet, dass** der Heißdampf (4) durch Wärmeaustausch mit dem Prozessgas in mehreren Überhitzerstufen (18, 18', 18") überhitzt wird, dass das Prozessgas in Teilströmen (6, 7) mit unterschiedlichen Temperaturniveaus abgezogen wird, und dass durch die Menge und/oder Temperatur der Verbrennungsluft (3) die Entnahmegastemperaturen so geregelt werden,
dass das Temperaturniveau eines ersten, zwischen den Überhitzerstufen (18, 18', 18") aus dem Dampferzeuger abgezogenen Teilstromes (6) auf die Verwendung des Prozessgases zur Vorwärmung (8) von Roherz abgestimmt wird und
dass das Temperaturniveau eines zweiten, am Dampferzeugeraustritt abgezogenen Teilstromes (7) auf die Verwendung des Prozessgases zur Trocknung von Kohle abgestimmt wird.

2. Verfahren nach Anspruch 1, **dadurch gekennzeichnet, dass** der zur Roherzvorwärmung eingesetzte Prozessgasteilstrom (6) mit einer Temperatur zwischen 1000 und 1200 °C abgezogen wird und dass der zur Kohletrocknung verwendete Prozessgasteilstrom (7) den Dampferzeuger (2) mit einer Temperatur zwischen 750 °C und 900 °C verlässt.

3. Verfahren nach Anspruch 1 oder 2, **dadurch gekennzeichnet, dass** die Verbrennungsluft (3) in einem mit Prozessgas betriebenen Luftvorwärmer (19) auf eine Temperatur bis 550 °C vorgewärmt wird.

4. Verfahren nach einem der Ansprüche 1 bis 3, **dadurch gekennzeichnet, dass** die Entnahmegastemperaturen der Prozessgasteilströme (6, 7) durch Mengensteuerung der Verbrennungsluft (3) in einer Bandbreite von +/- 50K geregelt werden.

5. Verfahren nach einem der Ansprüche 1 bis 4, **dadurch gekennzeichnet, dass** dem Heißdampf (4) zwischen den Überhitzerstufen (18, 18', 18") Wasser (20) zur Temperaturregelung zugeführt wird und dass die Feineinstellung der Entnahmegastemperaturen der Prozessgasteilströme (6, 7) durch geregelte Zugabe von Wasser (20) in den Heißdampf (4) erfolgt.

6. Verfahren nach Anspruch 5, **dadurch gekennzeichnet, dass** die Entnahmegastemperaturen der Prozessgasströme (6, 7) durch die geregelte Zugabe von Wasser (20) in einer Bandbreite von +/- 20 K eingestellt werden.

7. Verfahren nach einem der Ansprüche 1 bis 6, **dadurch gekennzeichnet, dass** ein durch Lastwechsel oder Anlagestörungen bedingter Anstieg der Entnahmegastemperaturen durch Wassereindüsung in das Prozessgas ausgeglichen wird.

8. Verfahren nach einem der Ansprüche 1 bis 7, **dadurch gekennzeichnet, dass** der Dampferzeuger (2) mit vorgewärmtem Speisewasser (24) betrieben wird und dass durch Regelung der Speisewasservorwärmung eine Feinsteinstellung der Entnahmegastemperatur des am Dampferzeugeraustritt abgezogenen Prozessgasteilstromes (7) vorgenommen wird.

## Claims

1. A method for recovering waste heat from pig iron production in revolving hearth furnaces, wherein a low-caloric waste gas (1) that is generated in pig iron production with residual contents of CO and H₂ is afterburned together with combustion air (3) in a steam generator (2) to yield an inert process gas, and wherein hot steam (4) is generated for a steam turbine process (5) by heat exchange with the process gas, **characterised in that** the hot steam (4) is superheated in several superheating stages (18, 18', 18"), that the process gas is drawn off in partial streams (6, 7) with different temperature levels, and that the temperatures of the drawn off gases are regulated by the quantity and/or temperature of the combustion air (3) in such manner
that the temperature level of a first partial stream (6) drawn off from the steam generator between the superheating stages (18, 18', 18") is adjusted to correspond to the use of the process gas for preheating (8) pig iron ore and
that the temperature level of a second partial stream (7) drawn off at the steam generator outlet is adjusted to correspond to the use of the process gas for drying coal.

2. The method according to claim 1, **characterised in that** the partial stream of process gas (6) used for preheating pig iron ore is drawn off at a temperature between 1000 and 1200 °C, and that the partial stream of process gas (7) used for drying coal is at a temperature 750 and 900 °C when it exits the steam generator (2).

3. The method according to either of claims 1 or 2, **characterised in that** the combustion air (3) is preheated to a temperature as high as 550 °C in an air preheater (19) operated by process gas.

4. The method according to any of claims 1 to 3, **characterised in that** the temperatures of the gases drawn off in partial process gas streams (6, 7) are regulated in a range +/-50 K by controlling the volume of combustion air (3).

5. The method according to any of claims 1 to 4, **characterised in that** water (20) is added to the hot steam (4) between the superheating stages (18, 18', 18") to regulate the temperature, and that the temperatures of the drawn off gases in partial process gas streams (6, 7) are fine-tuned by the regulated addition of water (20) to the hot steam (4).

6. The method according to claim 5, **characterised in that** the temperatures of the drawn off gases in partial process gas streams (6, 7) are adjusted in a range of +/-20 K by the regulated addition of water (20).

7. The method according to any of claims 1 to 6, **characterised in that** a rise in the temperatures of the drawn off gases caused by a change in loading or system malfunctions is compensated by jetting a stream of water into the process gas.

8. The method according to any of claims 1 to 7, **characterised in that** the steam generator (2) is operated with preheated feed water (24) and that the drawn off gas temperature of the partial process gas stream (7) drawn off at the steam generator outlet is fine-tuned by regulating the preheating of the feed water.

## Revendications

1. Procédé de recyclage de chaleur émise lors de la production de fonte brute dans des fours à sole tournante, dans lequel un gaz d'échappement (1) faiblement calorique se formant lors de la production de fonte brute avec des teneurs résiduelles en CO et H₂ est rebrûlé dans un générateur de vapeur (2) avec de l'air de combustion (3) pour obtenir un gaz de traitement inerte et dans lequel de la vapeur brûlante (4) pour procédé à turbine à vapeur (5) est générée par échange thermique avec le gaz de traitement, **caractérisé en ce que** la vapeur brûlante (4) est surchauffée par échange thermique avec le gaz de traitement à plusieurs niveaux du surchauffeur (18, 18', 18"), que le gaz de traitement est extrait en flux partiels (6, 7) à différents niveaux de température et que les températures du gaz extrait sont ainsi régulées par la quantité et/ou la température de l'air de combustion (3) de manière à ce que
le niveau de température d'un premier flux partiel (6) extrait du générateur de vapeur entre les niveaux du surchauffeur (18, 18', 18") soit adapté pour une utilisation du gaz de traitement pour préchauffer (8) du minerai brut et
le niveau de température d'un deuxième flux partiel (7) extrait à la sortie du générateur de vapeur adapté pour une utilisation du gaz de traitement pour sécher du charbon.

2. Procédé selon la revendication 1, **caractérisé en ce que** le flux partiel de gaz de traitement (6) utilisé pour préchauffer du minerai brut est extrait à une température allant de 1000 à 1200 °C et que le flux partiel de gaz de traitement (7) utilisé pour sécher du charbon quitte le générateur de vapeur (2) à une température allant de 750 °C à 900 °C.

3. Procédé selon la revendication 1 ou 2, **caractérisé en ce que** l'air de combustion (3) est préchauffé dans un réchauffeur d'air (19) fonctionnant au gaz de traitement à une température allant jusqu'à 550 °C.

4. Procédé selon une des revendications 1 à 3, **caractérisé en ce que** les températures de gaz extrait des flux partiels de gaz de traitement (6, 7) sont régulées en contrôlant la quantité d'air de combustion (3) dans une largeur de bande de +/- 50 K.

5. Procédé selon une des revendications 1 à 4, **caractérisé en ce que** de l'eau (20) est envoyée dans la vapeur brûlante (4) entre les niveaux du surchauffeur (18, 18', 18") pour réguler la température et que le réglage de précision des températures de gaz extrait des flux partiels de gaz de traitement (6, 7) a lieu par ajout régulé d'eau (20) dans la vapeur brûlante (4).

6. Procédé selon la revendication 5, **caractérisé en ce que** les températures de gaz extrait des flux de gaz de traitement (6, 7) sont réglées par ajout régulé d'eau (20) dans une largeur de bande de +/- 20 K.

7. Procédé selon une des revendications 1 à 6, **caractérisé en ce qu'**une hausse due à un changement de charge ou à des perturbations de l'installation des températures du gaz extrait est compensée par injection d'eau dans le gaz de traitement.

8. Procédé selon une des revendications 1 à 7, **caractérisé en ce que** le générateur de vapeur (2) fonctionne à l'eau d'alimentation préchauffée (24) et qu'en régulant le préchauffage de l'eau d'alimentation, on procède à un réglage de précision de la température de gaz extrait du flux partiel de gaz de traitement (7) extrait à la sortie du générateur de vapeur.
